# EUROPÄISCHE PATENTANMELDUNG

(11) **EP 1 657 110 A1**
(43) Veröffentlichungstag der Anmeldung: **17.05.2006**
(21) Anmeldenummer: 05024512.5
(22) Anmeldetag: 10.11.2005
(51) Int. Cl.: B60Q 1/26, B60Q 5/00

(54) **Dachbalken für Einsatzfahrzeuge**

(30) Priorität: 10.11.2004 DE 202004017722 U
(71) Anmelder: Pintsch Bamag Antriebs- und Verkehrstechnik GmbH, 46537 Dinslaken (DE)
(72) Erfinder: Brinkmann, Uwe, 46147 Oberhausen (DE); Schmitz, Hans-Jörg, 47445 Moers (DE)
(74) Vertreter: Patentanwälte Ruff, Wilhelm, Beier, Dauster & Partner

(57) **Zusammenfassung**

Die Erfindung betrifft einen Dachbalken für Einsatzfahrzeuge, mit einer Bodenplatte zur Verbindung mit einem Fahrzeug und einer Haube, die zusammen mit der Bodenplatte wenigstens abschnittsweise einen Montageraum definiert, in dem Funktionskomponenten und Befestigungselemente angeordnet sind.

Erfindungsgemäß liegt die Haube (14; 84) wenigstens abschnittsweise an der Bodenplatte (60; 86) sowie an den Funktionskomponenten und/oder an den Befestigungselementen (38, 40, 42, 44, 46; 88) an.

## Beschreibung

Die Erfindung betrifft einen Dachbalken für Einsatzfahrzeuge mit einer Bodenplatte zur Verbindung mit einem Fahrzeug und einer Haube, die zusammen mit der Bodenplatte wenigstens abschnittsweise einen Montageraum definiert, in dem Funktionskomponenten und Befestigungselemente angeordnet sind.

Dachbalken für Einsatzfahrzeuge sind beispielsweise aus der deutschen Patentschrift DE 38 07 684 C2 bekannt. Ein Dachbalken weist dort eine Bodenplatte und eine darauf aufgesetzte Haube auf. Innerhalb des Dachbalkens sind zur Bildung einzelner Kammern und zur Aussteifung Schottwände vorgesehen, die mit Sollbruchstellen versehen sind, um bei einem Überschlag eine Deformation des Dachbalkens zu ermöglichen.

Ein weiterer Dachbalken ist aus der deutschen Offenlegungsschrift DE 38 44 573 A1 bekannt. Auch dort weist der Dachbalken eine Bodenplatte und eine Haube auf, wobei die Haube zusätzlich noch ein deckelartiges Oberteil aufweist, das mit Schnellverschlüssen befestigbar ist.

Aus der europäischen Patentschrift EP 0 546 211 P1 ist ein Gerätegehäuse für ein elektronisches Gerät bekannt, bei dem eine Trägereinheit aus Kunststoffmaterial vorgesehen ist, die Aussparungen aufweist, die an die äußere Formgebungen von in das Gehäuse einzusetzenden Komponenten angepasst sind. Eine weitere Trägereinheit kann auf die erste Trägereinheit aufgesetzt werden und weist ebenfalls an die Komponenten angepasste Aussparungen auf. Im montierten Zustand sind die Komponenten dann von der Trägereinheit umschlossen.

Mit der Erfindung soll ein Dachbalken für Einsatzfahrzeuge geschaffen werden, der bei stabilem Aufbau in Leichtbauweise ausführbar ist.

Erfindungsgemäß ist hierzu ein Dachbalken für Einsatzfahrzeuge mit einer Bodenplatte zur Verbindung mit einem Fahrzeug und einer Haube, die zusammen mit der Bodenplatte wenigstens abschnittsweise einen Montageraum definiert, in dem Funktionskomponenten und Befestigungselemente angeordnet sind, vorgesehen, bei dem die Haube wenigstens abschnittsweise an der Bodenplatte sowie an den Funktionskomponenten und/oder an den Befestigungselementen anliegt.

Durch diese Maßnahmen wird eine sehr stabile Einheit aus Bodenplatte, Haube und Funktionskomponenten und/oder Befestigungselementen geschaffen, da Kräfte gleichzeitig durch Haube, Bodenplatte und Befestigungselemente bzw. Funktionskomponenten aufgenommen werden können. Die Stabilität des Dachbalkens wird daher im Verbund erreicht, so dass die Einzelkomponenten leichter ausgeführt werden können. Die Haube liegt zweckmäßigerweise flächig an der Bodenplatte, an den Funktionskomponenten und/oder an den Befestigungselementen an, um eine gute Kraftübertragung zu ermöglichen.

In Weiterbildung der Erfindung hintergreift die Haube die Bodenplatte wenigstens abschnittsweise auf einer, im montierten Zustand vom Montageraum abgewandten Seite.

Durch diese Anordnung wird eine erhöhte Wasserdichtheit des Dachbalkens ermöglicht, da von der Haube ablaufendes Wasser nicht zwischen Bodenplatte und Haube gelangen kann. Darüber hinaus wird auch die Stabilität des Verbundes aus Haube und Bodenplatte erreicht, da eine Kraftübertragung zwischen Haube und Bodenplatte dann nicht über zusätzliche Befestigungsmittel, beispielsweise Schrauben oder Schnellverschlüsse erfolgen muss, sondern sich die Haube unmittelbar an der Bodenplatte abstützen kann.

In Weiterbildung der Erfindung liegt die Haube im montierten Zustand unter Vorspannung an den Funktionskomponenten und/oder den Befestigungselementen an.

Auf diese Weise kann die Stabilität des Verbundes aus Haube, Bodenplatte sowie Funktionskomponenten und/oder Befestigungselementen weiter erhöht werden. Im Ergebnis kann beispielsweise die Haube leichter ausgeführt werden. Die Vorspannung kann dabei beispielsweise durch eine elastische Verformung der Haube und/oder eine elastische Verformung der Befestigungselemente erzielt werden.

In Weiterbildung der Erfindung ist die Haube klappbar an der Bodenplatte angeordnet.

Auf diese Weise wird eine einfache Zugänglichkeit des Montageraums des Dachbalkens für Montagezwecke und Reparaturzwecke erreicht.

In Weiterbildung der Erfindung weist die Haube wenigstens eine Vorderwand und eine Rückwand auf, die jeweils klappbar an der Bodenplatte befestigt sind.

Durch diese Maßnahmen wird die Zugänglichkeit weiter verbessert. Beispielsweise weisen Dachbalken für Polizeifahrzeuge sowohl Front- als auch Hecklautsprecher auf. Indem Vorderwand und Rückwand jeweils klappbar sind, können diese Komponenten in besonders einfacher Weise gewartet und/oder ausgetauscht werden.

In Weiterbildung der Erfindung sind die Haube und die Bodenplatte mittels ineinander eingreifender Vorsprünge und die Vorsprünge klammerartig umgreifender Nuten miteinander verbindbar.

Auf diese Weise wird eine stabile und konstruktiv einfache Verbindung zwischen Haube und Bodenplatte geschaffen. Beispielsweise kann die Haube auf die Bodenplatte aufgeschoben werden, so dass die Vorsprünge durch eine Schiebebewegung in die passenden Nuten eingeführt werden. Die Vorsprünge können aber auch in die passenden Nuten eingehängt oder eingerastet werden. Beispielsweise können Nuten an den Seitenkanten der Bodenplatte oder an deren Unterseite angeordnet sein und Vorsprünge können an einer Innenseite der Haube, die im montierten Zustand dem Montageraum zugewandt ist, vorgesehen sein. Zweckmäßigerweise laufen die Vorsprünge und Nuten über die gesamte in Fahrzeugquerrichtung liegende Länge der Haube und der Bodenplatte, so dass gleichzeitig eine zuverlässige Abdichtung gegen Spritzwasser erreicht wird. Auf diese Weise können Haube und Bodenplatte auch als Strangpressprofil ausgebildet werden. Vorzugsweise sind die Vorsprünge an einer Längskante der Haube mit hakenartigem Querschnitt ausgebildet und diese hakenartigen Querschnitte werden in eine, einen Hinterschnitt aufweisende Nut an der Seitenkante der Bodenplatte eingehängt. Dadurch kann gleichzeitig eine scharnierartige Verbindung zwischen Haube und Bodenplatte geschaffen werden.

In Weiterbildung der Erfindung ist die Haube wenigstens zweiteilig ausgebildet.

Auf diese Weise kann, insbesondere bei klappbaren Haubenteilen, die Zugänglichkeit des Montageraums weiter verbessert werden.

In Weiterbildung der Erfindung sind die Haubenteile mittels Verschlussschienen verbindbar, die vorteilhafterweise Vorsprünge der Haubenteile klammerartig umgreifen.

Auf diese Weise kann eine sichere und dabei leicht lösbare Verbindung zwischen den Haubenteilen geschaffen werden. Beispielsweise können die Verschlussschienen klammerartig auf die Vorsprünge aufgerastet werden. Zweckmäßigerweise verlaufen sowohl die Vorsprünge als auch die Verschlussschienen über die gesamte Länge der Haube, so dass einerseits eine sichere Befestigung der Haubenteile aneinander und gleichzeitig eine zuverlässige Abdichtung gegen Spritzwasser realisiert wird.

In Weiterbildung der Erfindung greifen die Haubenteile mittels wenigstens einer Nut und Federanordnung ineinander.

Auch durch diese Maßnahme wird eine sichere und dabei spritzwasserdichte Verbindung der Haubenteile begünstigt. Die Nut- und Federanordnung läuft zweckmäßigerweise über die gesamte Länge der Haube.

In Weiterbildung der Erfindung weist die Haube wenigstens einen Deckelabschnitt, eine Vorderwand und eine Rückwand auf, die jeweils mittels Verschlussschienen miteinander verbindbar sind.

Ein solcher dreiteiliger Aufbau erleichtert bei in Fahrzeuglängsrichtung langen Dachbalken die Montage. Beispielsweise kann das Deckelelement baureihenübergreifend identisch ausgebildet sein wohingegen die Vorderwand und die Rückwand dem Einsatzzweck des Dachbalkens entsprechend ausgebildet sind.

In Weiterbildung der Erfindung weisen die Vorderwand und die Rückwand wenigstens einen, mit einer Hauptkomponente parallel zur Bodenplatte verlaufenden Abschnitt auf, der im montierten Zustand gegen die wenigstens eine Funktionskomponente und/oder das wenigstens eine Befestigungselement verspannt ist.

Beispielsweise haben die Vorderwand und die Rückwand in Fahrzeugquerrichtung gesehen einen L-artigen, vorzugsweise U-artigen Querschnitt, so dass sie aufgrund ihrer Formgebung eine Vorspannkraft aufbringen können.

Erfindungsgemäß weist ein Dachbalken ein Gehäuse, wenigstens eine Funktionskomponente im Gehäuse und Befestigungselemente für die Funktionskomponenten auf und die Befestigungselemente weisen ein erstes Formteil und ein zweites Formteil mit an die wenigstens eine Funktionskomponente angepassten Ausnehmungen auf, wobei die wenigstens eine Funktionskomponente zwischen dem ersten Formteil und dem zweiten Formteil aufgenommen und bei geschlossenem Gehäuse zwischen diesen gesichert ist.

Durch eine solche formschlussartige Sicherung der Funktionskomponenten wird ein sehr einfach montierbarer Dachbalken geschaffen, da die Funktionskomponenten lediglich in die passenden Ausnehmungen eingelegt und nicht mehr mittels separater Schrauben an der Bodenplatte befestigt werden müssen. Darüber hinaus wird eine vibrationsgeschützte Aufnahme der Funktionskomponenten realisiert, die gerade bei den rauen Einsatzbedingungen von Dachbalken von Vorteil ist. Beispielsweise können auch Kabelzuleitungen und Stecker in passende Ausnehmungen eingebracht werden, so dass auch diese vibrationsgeschützt angeordnet sind.

In Weiterbildung der Erfindung weist das Gehäuse eine Bodenplatte und eine Haube auf, wobei im montierten Zustand die Haube, das erste und zweite Formteil und/oder die Bodenplatte unter Vorspannung aneinander anliegen.

Eine solche Vorspannung ermöglicht es, einen besonders stabilen Verbund aus Haube, Bodenplatte und Formteilen zu schaffen, die vorzugsweise flächig aneinander anliegen. In den Dachbalken eingeleitete Kräfte können dadurch gleichzeitig von der Bodenplatte, der Haube und den Formteilen aufgenommen und dadurch großflächig verteilt werden. Die einzelnen Komponenten, speziell die Haube und die Bodenplatte, können dadurch in Leichtbauweise ausgeführt werden. Eine Vorspannung wird beispielsweise durch eine elastische Verformung der Haube oder der Formteile erzielt.

In Weiterbildung der Erfindung liegen im montierten Zustand die Formteile unter Vorspannung an der wenigstens einen Funktionskomponente an.

Durch diese Maßnahmen ist die Funktionskomponente auch bei starken Erschütterungen des Dachbalkens, beispielsweise bei schneller Geländefahrt, vibrationsgeschützt und sicher zwischen den Formteilen aufgenommen.

In Weiterbildung der Erfindung ist die Bodenplatte als Strangpressprofil ausgebildet.

Die Ausbildung als Strangpressprofil ermöglicht eine sehr steife und dabei leichte Ausführung der Bodenplatte, wobei gleichzeitig mit der Herstellung beispielsweise Nuten oder Vorsprünge für die Anbindung der Haube sowie der Funktionskomponenten und Befestigungselemente vorgesehen werden können.

In Weiterbildung der Erfindung greift wenigstens eines der Formteile in Nuten und/oder Vorsprünge der Bodenplatte ein.

Auf diese Weise wird die Realisierung eines stabilen Verbundes aus Bodenplatte, Formteilen und Haube weiter unterstützt.

In Weiterbildung der Erfindung sind die Formteile mittels ineinander eingreifender Nuten und/oder Vorsprünge aneinander gesichert.

Auf diese Weise kann zum einen die exakte Ausrichtung der Formteile untereinander gewährleistet werden und darüber hinaus wird auch eine Kraftübertragung zwischen Formteilen ermöglicht.

In Weiterbildung der Erfindung sind die Formteile als Schaumteile ausgebildet.

Schaumteile oder Teile aus schaumartigem Material sind kostengünstig und mit hoher Präzision herstellbar. Vorteilhafterweise weist der Schaum leicht federnde Eigenschaften auf, um eine Vorspannung der Formteile gegen die Funktionskomponenten, die Haube und/oder die Bodenplatte zu ermöglichen.

In Weiterbildung der Erfindung ist wenigstens eines der seitlichen Enden der Haube mittels einer mit der Bodenplatte verbundenen Kuppelhaube überdeckt.

Auf diese Weise kann beispielsweise das sonst offene seitliche Ende der Haube verschlossen werden und gleichzeitig kann unter der Kuppelhaube beispielsweise eine Rundumsignalleuchte angeordnet werden. Hierzu ist die Kuppelhaube wenigstens abschnittsweise transparent ausgebildet. Die Kuppelhaube kann darüber hinaus mittels eines Schnellverschlusses an der Bodenplatte verrastbar sein. Bei symmetrischem Aufbau des Dachbalkens werden mittels solcher Kuppelhauben dann beide offenen Enden der Haube verschlossen, so dass ein formschöner, gleichzeitig in hohem Maße spritzwassergeschützter und dabei stabiler Dachbalken entsteht. Nach Entfernen der beiden Kuppelhauben kann die Haube dann beispielsweise aufgeklappt werden und sämtliche Funktionskomponenten des Dachbalkens sind in einfacher Weise zugänglich.

Weitere Merkmale und Vorteile der Erfindung ergeben sich aus der folgenden Beschreibung bevorzugter Ausführungsformen der Erfindung im Zusammenhang mit den Zeichnungen. In den Zeichnungen zeigen:
- Fig. 1: eine perspektivische Ansicht eines erfindungsgemäßen Dachbalkens von schräg vorne,
- Fig. 2: eine perspektivische Ansicht des Dachbalkens der Fig. 1 bei abgenommener Mittelhaube und abgenommenen Kuppelhauben,
- Fig. 3: den Dachbalken der Fig. 2 in perspektivischer Ansicht von schräg hinten,
- Fig. 4: eine Seitenansicht des Dachbalkens der Fig. 1 in teilweise montiertem Zustand,
- Fig. 5: eine perspektivische Ansicht des Dachbalkens der Fig. 4,
- Fig. 6: eine ausschnittsweise Seitenansicht ähnlich Fig. 4 mit geschlossener Haube und gleichzeitig gestrichelt eingezeichneter geöffneter Haube,
- Fig. 7: eine Seitenansicht eines Dachbalkens gemäß einer zweiten Ausführungsform der Erfindung im teilweise montierten Zustand,
- Fig. 8: eine Ansicht des Dachbalkens der Fig. 2 bei abgenommenen oberen Schaumteilen,
- Fig. 9: eine der Fig. 8 entsprechende Ansicht ohne Funktionskomponenten,
- Fig. 10: eine Ansicht von schräg unten eines oberen Schaumteils, das auf die in der Fig. 8 dargestellte Anordnung aufgesetzt wird, und
- Fig. 11 bis 13: den Aufbau von Elektronikeinheiten in dem Dachbalken der Fig. 1.

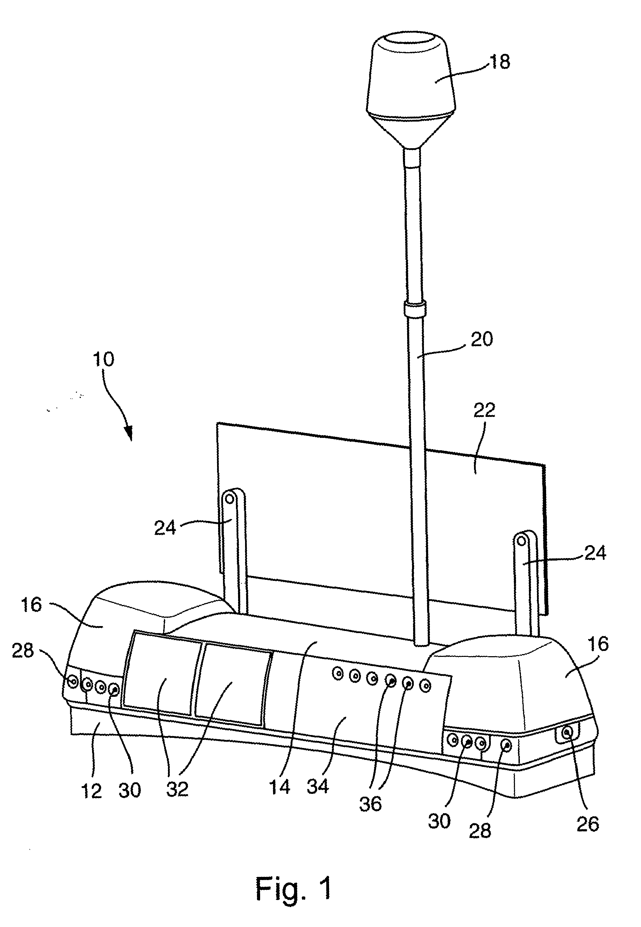

Der in der Ansicht der Fig. 1 perspektivisch dargestellte Dachbalken 10 weist eine in der Ansicht der Fig. 1 nicht zu erkennende Bodenplatte und eine zwischen Bodenplatte und Fahrzeugdach anzuordnende Dichtung 12 auf. In der Darstellung der Fig. 1 zu erkennen ist eine mittig am Dachbalken angeordnete Haube 14, die an beiden seitlichen Enden durch jeweils eine Kuppelhaube 16 überdeckt ist. Die Kuppelhauben 16 sind wenigstens in ihrem oberen Bereich transparent ausgeführt und überdecken jeweils eine Rundumkennleuchte. Eine weitere Rundumkennleuchte 18 ist mittels einer Stabhalterung 20 oberhalb des Dachbalkens 10 angeordnet. Weiterhin ist ein in Fahrtrichtung gesehen hinter dem Dachbalken 10 angeordnetes Warnschild 22 gezeigt, das mittels zweier Arme 24 mit der Bodenplatte des Dachbalkens verbindbar ist. Auch die Stabhalterung 20 ist in geeigneter, nicht dargestellter Weise mit der Bodenplatte des Dachbalkens 10 verbunden.

Im Bereich der seitlichen Kuppelhauben 16 weist der Dachbalken 10 seitlich gerichtete Suchscheinwerfer 26 auf, wobei in der dargestellten Ausführungsform auf jeder Seite drei LED-Scheinwerfer vorgesehen sind. Im Bereich der Kuppelhauben 16 ist weiterhin auf der Vorderseite sowie auf der in Fig. 1 nicht sichtbaren Rückseite jeweils ein Fahrrichtungsanzeiger 28 vorgesehen. Darüber hinaus sind auf der in der Fig. 1 erkennbaren Vorderseite der Kuppelhauben 16 vordere Arbeitsscheinwerfer 30 sowie in der Fig. 1 nicht sichtbare hintere Arbeitsscheinwerfer vorgesehen. Die vorderen Arbeitsscheinwerfer 30 sind bei der dargestellten Ausführungsform durch drei LED-Scheinwerfer realisiert. Im Bereich der Haube 14 ist ein Lautsprechergitter mit dahinter erkennbaren Frontlautsprechern 32 angeordnet. Benachbart zu den Frontlautsprechern ist ein Schriftfeld 34 vorgesehen, in dem beispielsweise ein Anhaltesignal angezeigt werden kann. Oberhalb des Schriftfelds 34 sind Hochleitungs-LED-Frontblitzeinheiten 36 vorgesehen.

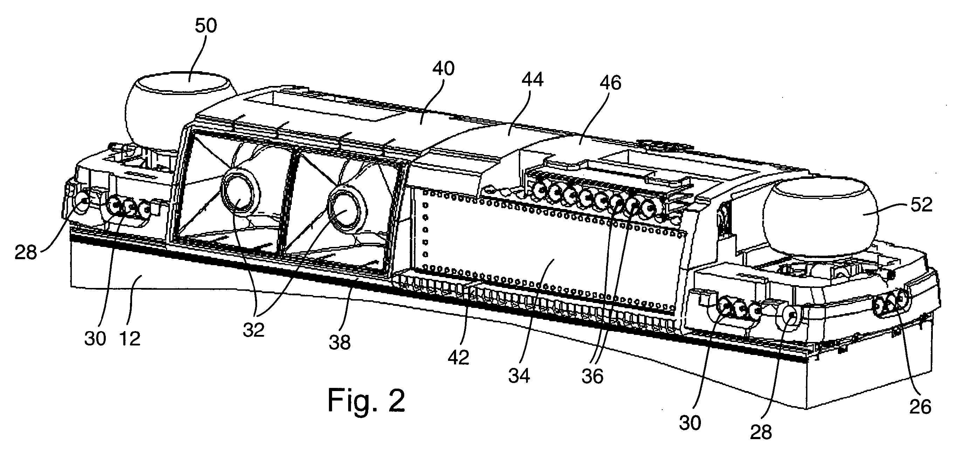

Die Darstellung der Fig. 2 zeigt den Dachbalken 10 der Fig. 1 bei abgenommener Haube 14 und abgenommenen Kuppelhauben 16. Es ist zu erkennen, dass sämtliche Funktionskomponenten des Dachbalkens 10, beispielsweise die Frontlautsprecher 32 und das Schriftfeld 34, zwischen Formschaumteilen aufgenommen sind. Beispielsweise sind die Frontlautsprecher 32 zwischen einem unteren Formschaumteil 38 und einem oberen Formschaumteil 40 aufgenommen und das Schriftfeld 34 ist zwischen einem unteren Formschaumteil 42 und zwei oberen Formschaumteilen 44, 46 aufgenommen. Jedes dieser Formschaumteile 38, 40, 42, 44, 46 weist Ausnehmungen auf, die an die darin aufzunehmenden Funktionskomponenten angepasst sind, so dass die Funktionskomponenten dann formschlüssig zwischen den jeweiligen Formschaumteilen 38, 40, 42, 44, 46 gesichert sind. In der Fig. 2 ist dies beispielsweise anhand der LED-Frontblitzer 36 zu erkennen, die in kreiszylinderabschnittsförmigen Ausnehmungen des Formteils 46 liegen. Ein weiteres, auf die LED-Frontblitzer 36 aufzusetzendes Formschaumteil ist in der Darstellung der Fig. 2 nicht dargestellt. In ähnlicher Weise sind die Arbeitsscheinwerfer 30, 26 sowie die Fahrtrichtungsanzeiger 28 in passenden Ausnehmungen eines jeweiligen Formschaumteils 48 aufgenommen.

Eine rechte Rundumkennleuchte 50 sowie eine linke Rundumkennleuchte 52 sind in ihrem jeweiligen unteren Abschnitt, der den Antriebsmotor aufweist, ebenfalls in einem jeweiligen Formschaumteil aufgenommen.

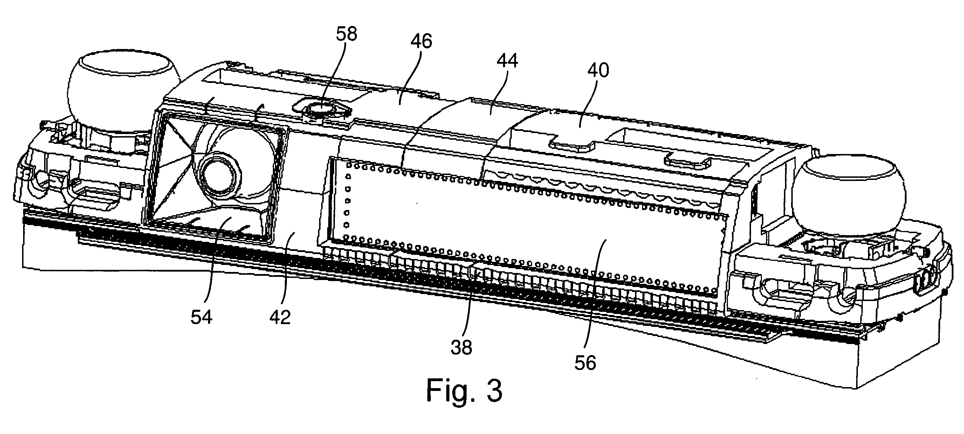

Die Darstellung der Fig. 3 zeigt den in der Fig. 2 dargestellten Dachbalken 10 in einer Ansicht von hinten. Dabei ist zu erkennen, dass auch ein Hecklautsprecher 54 sowie ein hinteres Schriftfeld 56 zwischen dem unteren Formschaumteil 38 und den oberen Formschaumteilen 40, 44 und 46 aufgenommen ist. Der Hecklautsprecher 54 ist zwischen dem unteren Formschaumteil 42 und dem oberen Formschaumteil 46 aufgenommen. In dem oberen Formschaumteil 46 ist eine kreisförmige Öffnung 58 zur Aufnahme der in der Fig. 1 dargestellten Stabhalterung 20 zu erkennen.

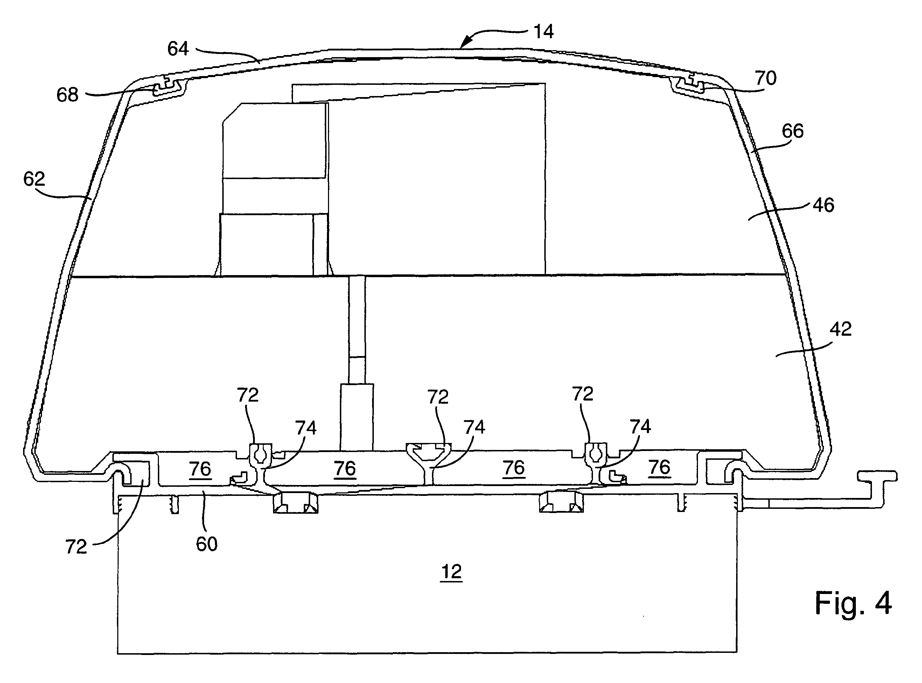

Die Darstellung der Fig. 4 zeigt den Dachbalken der Fig. 1 in einer Seitenansicht, wobei die seitlichen Kuppelhauben 16 sowie sämtliche darin befindlichen Funktionskomponenten abgenommen sind. In der Fig. 4 ist dadurch die Haube 14 zu erkennen, die mit der Bodenplatte 60 verbunden ist und zusammen mit der Bodenplatte 60 einen Montageraum definiert, in dem in der Darstellung der Fig. 4 lediglich das untere Formschaumteil 42 sowie das obere Formschaumteil 46 zu erkennen sind. An einer im montierten Zustand einem Fahrzeugdach zugewandten Unterseite der Bodenplatte 60 ist die Dichtung 12 angeordnet.

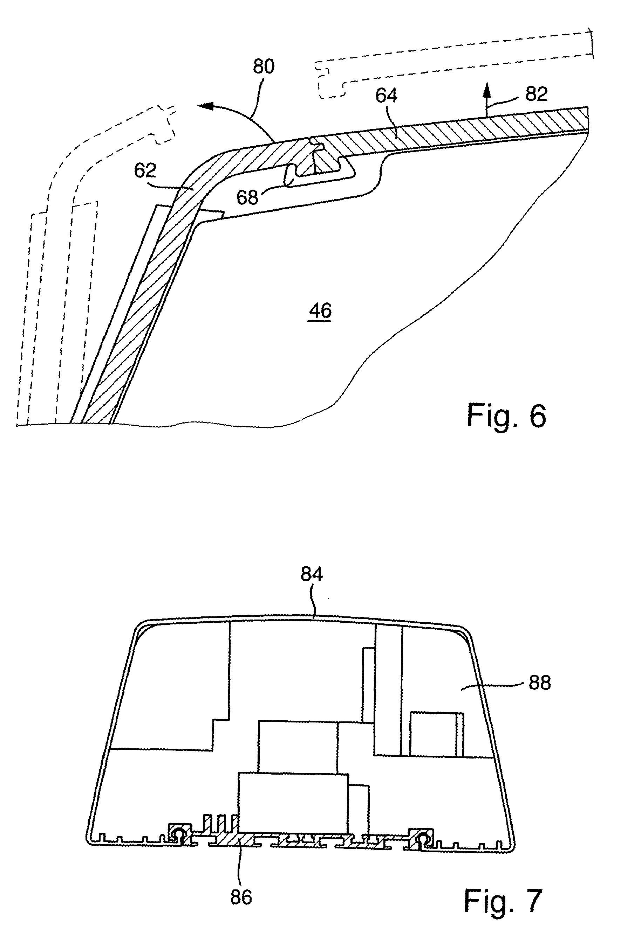

Die Haube 14 ist dreiteilig aufgebaut und weist eine Vorderwand 62, einen Deckelabschnitt 64 und einen Rückwandabschnitt 66 auf. Der Vorderwandabschnitt 62 und der Deckelabschnitt 64 sind mittels einer ersten Verschlussschiene 68 miteinander verbunden und der Deckelabschnitt und der Rückwandabschnitt 66 sind mittels einer zweiten Verschlussschiene 70 miteinander verbunden. Die Verbindung der einzelnen Haubenteile untereinander wird noch detaillierter anhand der Fig. 6 erläutert. Die Haubenteile 62, 64 und 66 sind mittels der Verschlussschienen 68, 70 so miteinander verbunden, dass sie einen stabilen Verbund bilden und zwischen den Haubenteilen 62, 64, 66 Kräfte übertragen werden können.

Der Vorderwandabschnitt 62 ist an seiner in der Fig. 4 unteren Längskante im Querschnitt hakenartig ausgebildet und greift mit dieser hakenartigen Längskante in eine Nut 72 an der Bodenplatte 60 ein. Die Nut 72 bildet einen Hinterschnitt, der von der hakenartigen Längskante der Vorderwand 62 hintergriffen wird. Wie in der Fig. 4 zu erkennen ist, kann die Vorderwand 62 durch Einhängen des hakenartigen Vorsprungs an ihrer unteren Längskante dadurch mittels einer einfachen Drehbewegung in die Nut 72 eingehängt werden und ist in der Position der Fig. 4 dann sicher in der Nut 72 und damit an der Bodenplatte 60 befestigt. Es ist der Fig. 4 weiterhin zu entnehmen, dass ein Öffnungsschlitz der Nut 72 der Materialdicke im Bereich des hakenartigen Vorsprungs der Vorderwand 62 entspricht. Die hakenartige Längskante der Vorderwand 62 ist dadurch spielfrei in dem Öffnungsschlitz der Nut 72 aufgenommen. Neben der Montage der Vorderwand 62 mittels einer Drehbewegung kann, wie Fig. 4 zu entnehmen ist, die Vorderwand 62 auch in die Nut 72 eingeschoben werden, in der Fig. 4 somit in die Zeichenebene hinein. Die Rückwand 66 weist einen zur Vorderwand 62 identischen hakenförmigen Vorsprung auf, der in eine identisch ausgebildete Nut an der Bodenplatte 60 eingeführt ist.

Wie Fig. 4 weiter zu entnehmen ist, liegt die Haube 14 flächig an dem oberen Formschaumteil 46 und an dem unteren Formschaumteil 42 an. Die beiden Formschaumteile 42, 46 liegen ebenfalls flächig aneinander an und das untere Formschaumteil 42 stützt sich ebenfalls flächig an der Bodenplatte 60 ab. Speziell weist das untere Formschaumteil 42 Längsnuten 74 auf, in die passende Längsvorsprünge 76 der Bodenplatte (60) eingreifen. Seitlich der Längsvorsprünge 74 sind zwischen einer Unterseite des Formschaumteils 42 und einer Oberseite der Bodenplatte 60 Hohlräume 76 gebildet, die beispielsweise zum Durchführen von Anschlusskabeln oder der Anordnung von Befestigungsbolzen dienen können. Durch die flächige Anlage der Formschaumteile 42, 46, der Haube 14 und der Bodenplatte 60 wird ein stabiler Verbund gebildet, da an dem Dachbalken angreifende Kräfte großflächig und gleichzeitig in die Haube 14, die Formschaumteile 42, 46 und die Bodenplatte 60 eingeleitet werden. Die einzelnen Komponenten, speziell die Haube 14 mit Vorderwand 62, Deckelabschnitt 64 und Rückwand 66, können dadurch leichter als bei bekannten Dachbalken ausgeführt werden, da sich speziell die Haube 14 ja flächig an den Formschaumteilen 42, 46 abstützt und im Bereich ihrer beiden Längskanten formschlüssig in die Bodenplatte 60 eingreift. Zweckmäßigerweise liegt die Haube 14 dabei unter Vorspannung an den Formschaumteilen 42, 46 sowie der Bodenplatte 60 an, so dass die Formschaumteile 42, 46 gegen die Bodenplatte,60 und die Haube 14 gepresst werden. Dadurch wird nicht nur die Stabilität des gesamten Dachbalkens erhöht, ohne zusätzliche, versteifende Schottbleche vorsehen zu müssen, sondern die zwischen den Formschaumteilen 42, 46 angeordneten Funktionskomponenten werden darüber hinaus ebenfalls zuverlässig in ihrer Lage gehalten. Selbst bei extremen Erschütterungen, beispielsweise bei Geländefahrt mit hohem Tempo, werden die Funktionskomponenten dadurch sicher gehalten und gegen übermäßige Vibration geschützt. Vorteilhafterweise weisen die Formschaumteile 42, 46 hierzu leicht federnde Eigenschaften auf, um eine Vorspannung aufrecht erhalten zu können.

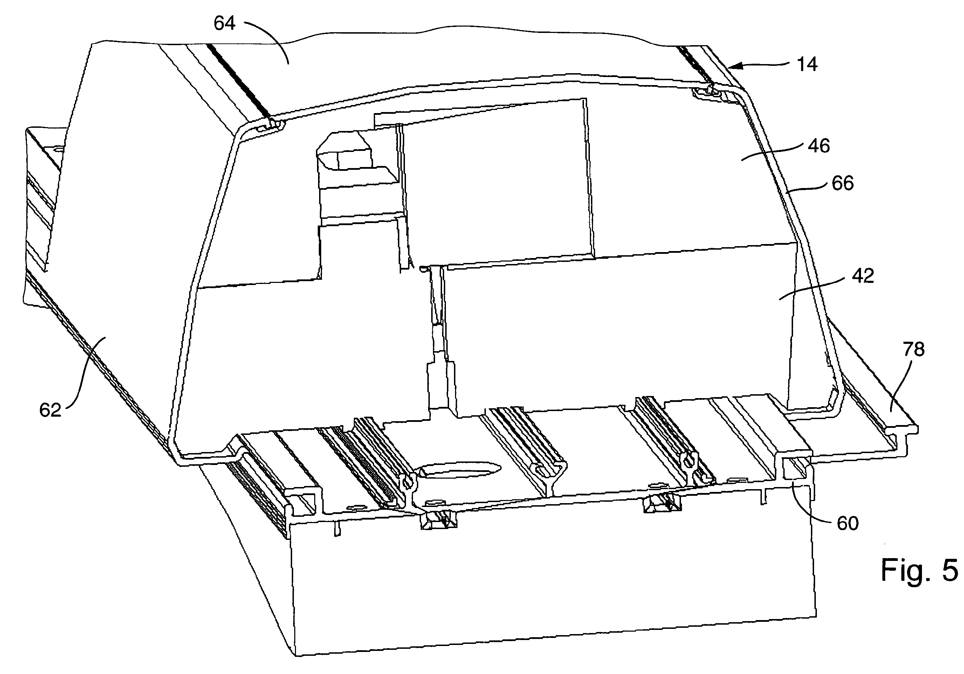

Die Darstellung der Fig. 5 zeigt die in Fig. 4 bereits dargestellten Bauteile zur Verdeutlichung noch einmal in leicht perspektivischer Ansicht. Gut zu erkennen ist dort ein sich über die Rückwand 66 der Haube 14 hinaus erstreckender Vorsprung 78 der Bodenplatte 60. Dieser Vorsprung 78 erstreckt sich zunächst parallel zur Bodenplatte 60 und ist dann im rechten Winkel nach oben abgebogen und weist an seinem freien Ende einen T-förmigen Querschnitt auf. Auf diesen Vorsprung 78 können in einfacher Weise die in Fig. 1 dargestellten Haltearme 24 für zusätzliche Warnschilder 22 aufgeschoben werden.

Die Darstellung der Fig. 6 zeigt einen vergrößerten Ausschnitt der Fig. 4, wobei der Deckelabschnitt 64 und die Vorderwand 62 durchgezogen in ihrer miteinander verbundenen Stellung dargestellt sind. Darüber hinaus sind die Vorderwand 62 und der Deckelabschnitt 64 im aufgeklappten Zustand gestrichelt dargestellt.

Anhand der vergrößerten Darstellung der Fig. 6 ist zu erkennen, dass die Vorderwand 62 und der Deckelabschnitt 64 mittels einer Nut- und Federanordnung ineinander eingreifen. Die Vorderwand 62 trägt auf ihrer, dem Deckelabschnitt 64 zugewandten Stirnseite einen über die gesamte Länge durchlaufenden leistenartigen Vorsprung, die Feder, die in eine passende Nut in der Stirnseite des Deckelabschnitts 64 eingreift, die der Vorderwand 62 zugewandt ist. Die einander zugewandten Enden der Vorderwand 62 und des Deckelabschnitts 64 sind darüber hinaus zum Montageraum hin verdickt ausgebildet, so dass im zusammengesetzten Zustand von Vorderwand 62 und Deckelabschnitt 64 ein ebenfalls über die gesamte Länge von Vorderwand 62 und Deckelabschnitt 64 durchlaufender Vorsprung gebildet ist, der sich jeweils hälftig aus einem Vorsprung an der Stirnseite der Vorderwand 62 und einem Vorsprung an der Stirnseite des Deckelabschnitts 64 zusammensetzt. Jeder dieser Vorsprünge weist auf seiner dem Montageraum zugewandten Seite eine größere Querabmessung auf als an seinem dem Montageraum abgewandten und in das Plattenmaterial der Vorderwand 62 bzw. des Deckelabschnitts 64 übergehenden Ende, so dass vom Montageraum aus gesehen jeweils ein Hinterschnitt gebildet ist.

Wie in Fig. 6 dargestellt ist wird im aneinander anliegenden Zustand von Vorderwand 62 und Deckelabschnitt 64 die Verschlussschiene 68 über den durch Vorderwand 62 und Deckelabschnitt 64 gebildeten Vorsprung geschoben. Die im Querschnitt klammerartige oder C-artige Verschlussschiene 68 presst dadurch die Stirnseiten von Vorderwand 62 und Deckelabschnitt 64 gegeneinander. Aufgrund des Hinterschnitts kann die Verschlussschiene 68 dabei nicht von dem Vorsprung herunterrutschen. Aufgrund der bereits beschriebenen Nut- und Federanordnung zwischen Vorderwand 62 und Deckelabschnitt 64 entsteht im montierten Zustand, das bedeutet mit der Verschlussschiene 68, ein stabiler Verbund, der eine Kraftübertragung zwischen Vorderwand 62 und Deckelabschnitt 64 ermöglicht.

Um Vorderwand 62 und Deckelabschnitt 64 voneinander zu trennen wird lediglich die Verschlussschiene 68 von dem Vorsprung heruntergezogen. Dies geschieht zweckmäßigerweise in Längsrichtung des Dachbalkens, das bedeutet senkrecht zur Zeichenebene der Fig. 6. Nachdem die Verschlussschiene 68 heruntergezogen wurde kann die Vorderwand 62 entlang dem Pfeil 80 nach vorne weggeklappt werden, bis sie beispielsweise die in der Fig. 6 gestrichelt dargestellte Position erreicht. In ähnlicher Weise kann der Deckelabschnitt 64 entlang dem Pfeil 82 nach oben abgehoben werden, wobei eine abgehobene Stellung des Deckelabschnitts 64 in der Fig. 6 gestrichelt dargestellt ist. Eine Verbindung zwischen dem Deckelabschnitt 64 und der in Fig. 6 nicht dargestellten Rückwand 66 ist in gleicher Weise wie zwischen Deckelabschnitt 64 und Vorderwand 62 ausgebildet.

Nach dem Abheben des Deckelabschnitts 64 und dem Aufklappen der Vorderwand 62 und/oder der Rückwand 66 sind die oberen Schaumteile, beispielsweise das Formschaumteil 46, frei zugänglich. Nachdem beispielsweise das obere Formschaumteil 46 abgehoben wurde können Funktionskomponenten in äußerst einfacher Weise ersetzt, repariert oder nachgerüstet werden.

Um den Dachbalken wieder zusammenzubauen muss lediglich das Formschaumteil 46 aufgesetzt werden, die Vorderwand 62 und der Deckelabschnitt 64 wieder in die durchgezogen dargestellte Stellung gebracht werden und zur Sicherung dieser Position wird dann die Verschlussschiene 68 auf den durch die Vorderwand 62 und den Deckelabschnitt 64 gebildeten und in Richtung des Montageraums vorragenden Vorsprung aufgeschoben.

Die Ansicht der Fig. 7 zeigt eine weitere Ausführungsform eines erfindungsgemäßen Dachbalkens. Im Unterschied zur Darstellung der Fig. 6 ist eine Haube 84 einteilig ausgeführt und weist einen C-förmigen Querschnitt auf. Die freien Enden des C-förmigen Querschnitts sind mit kreisquerschnittsförmigen Vorsprüngen versehen. Diese kreisquerschnittsförmigen Vorsprünge, die als Leisten über die gesamte Länge der Haube 84 durchlaufen, greifen in nach unten geöffnete Nuten einer Bodenplatte 86 ein. Die beiderseitigen Vorsprünge der Haube 84 können dabei in die Nuten der Bodenplatte 86 eingeschoben werden oder in der Darstellung der Fig. 7 von unten nach oben in die Nuten eingerastet werden. Um die im Inneren des zwischen Haube 84 und Bodenplatte 86 gebildeten Montageraums angeordneten Formschaumteile 88 abheben zu können kann die Haube 84 beispielsweise parallel zur Bodenplatte 86 verschoben werden.

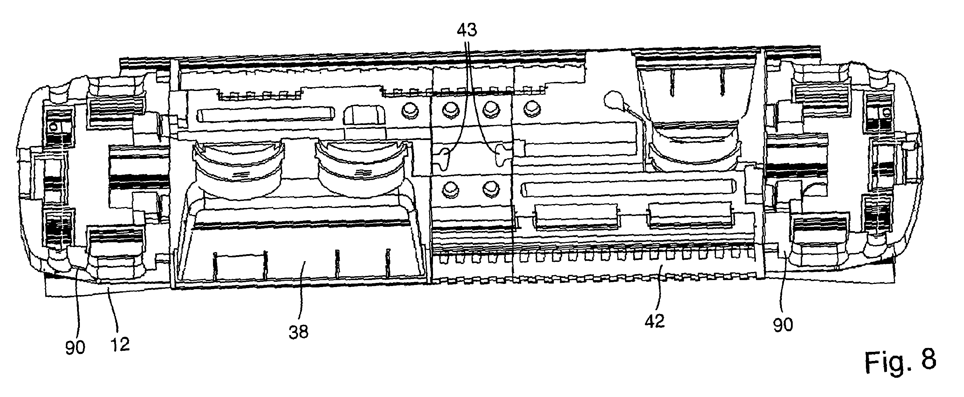

Die Darstellung der Fig. 8 zeigt die in der Darstellung der Fig. 2 bereits teilweise erläuterten unteren Formschaumteile 38, 42, wobei in der Darstellung der Fig. 8 sämtliche Funktionskomponenten entfernt wurden. Seitlich an die Formschaumteile 38, 42 schließen sich jeweils Formschaumteile 90 an, die zum Aufnehmen der unteren Abschnitte der Rundumkennleuchten 50, 52 vorgesehen sind. Wie Fig. 8 zu entnehmen ist, weisen die Formschaumteile 38, 42, 90 Ausnehmungen auf, die an die Außenkontur aufzunehmender Funktionskomponenten angepasst sind. Nach dem Einsetzen der Funktionskomponenten sind diese dadurch formschlüssig in den Formschaumteilen 38, 42, 90 aufgenommen. Die Formschaumteile 40, 44 und 46 sind beispielsweise mittels ineinander eingreifender Vorsprünge 43 und passender Nuten miteinander verrastet, die in der Darstellung der Fig. 8 lediglich gestrichelt dargestellt sind.

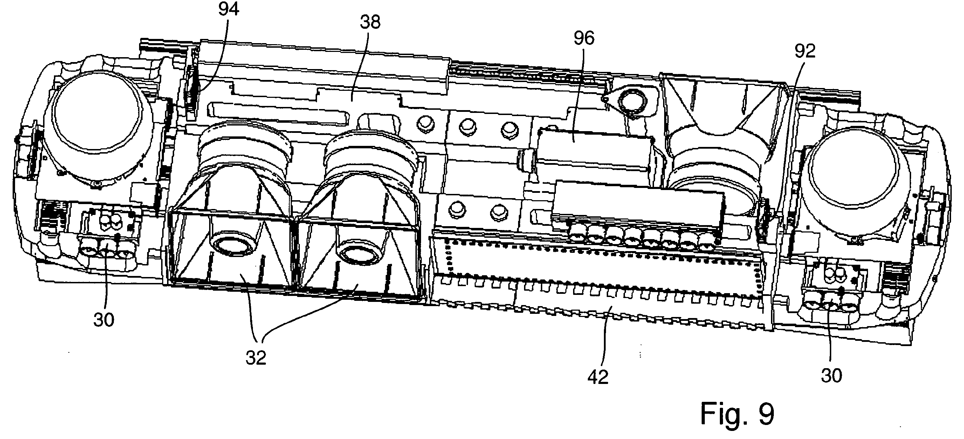

Zur Verdeutlichung zeigt die Darstellung der Fig. 9 eine der Fig. 8 vergleichbare Ansicht, wobei im Wesentlichen alle Funktionskomponenten eingelegt sind. Am Beispiel der Frontlautsprecher 32 ist zu erkennen, dass diese etwa hälftig in dem unteren Formschaumteil 38 aufgenommen sind. Auch die Frontarbeitsscheinwerfer 30 sind etwa hälftig in passenden Ausnehmungen aufgenommen. Zweckmäßigerweise werden dabei LED-Scheinwerfer verwendet, um die Wärmeentwicklung in Grenzen zu halten. Es ist aber durchaus möglich, in den Formschaumteilen Lüftungskanäle auszubilden, die von einem Lüfter beaufschlagt werden. In der Darstellung der Fig. 8 sind beispielsweise zwei Lüfter 92 und 94 zu erkennen.

Ebenfalls in der Fig. 9 zu erkennen ist ein Gehäuse 96 zur Aufnahme von Elektronikkomponenten. Auch dieses Gehäuse 96 wird in eine passende Ausnehmung der Formschaumteile eingeschoben.

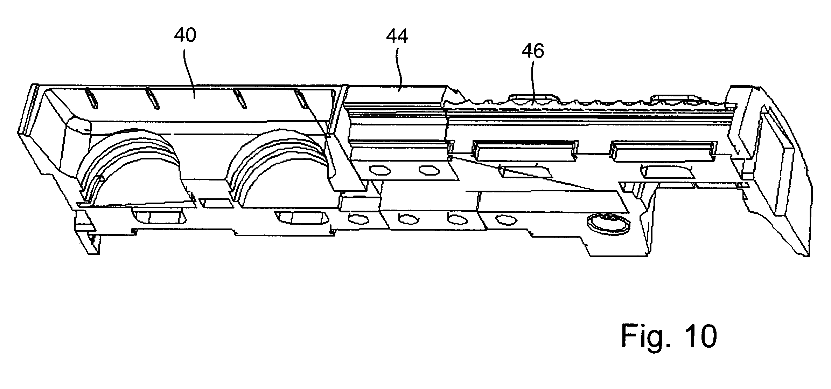

Fig. 10 zeigt eine Ansicht der oberen Formschaumteile 40, 44 und 46 von schräg unten. Am Beispiel der Frontlautsprecher 32 ist zu erkennen, dass auf das obere Formschaumteil 40 im Querschnitt halbkreisförmige Ausnehmungen zum formschlüssigen Aufnehmen der Ansteuermagneten der Frontlautsprecher 32 trägt

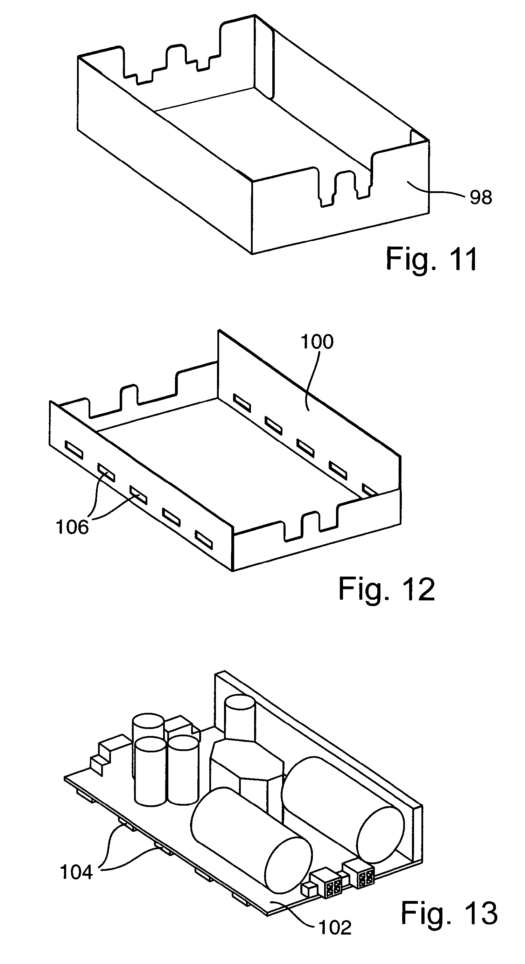

Die Fig. 11 bis 13 zeigen den Aufbau des Gehäuses 96 sowie die darin angeordneten Elektronikkomponenten. Das Gehäuse 96 weist eine Oberschale 98 und eine Unterschale 100 auf. Sowohl die Oberschale 98 als auch die Unterschale 100 sind aus elektrisch leitfähigem Werkstoff, vorzugsweise Federstahlblech, aufgebaut, um elektromagnetische Strahlungen zuverlässig abzuschirmen. Durch die Ausbildung aus Federstahlblech können Oberschale 98 und Unterschale 100 nach dem Zusammenschieben zuverlässig miteinander verrasten.

Die in der Fig. 13 gezeigte Platine 102 mit mehreren darauf angeordneten Elektronikkomponenten weist an beiden Längskanten voneinander beabstandete Vorsprünge 104 auf. Diese Vorsprünge 104 können in passende Schlitze 106 in den Seitenwänden der Unterschale 100 eingreifen. Zum Einrasten der Vorsprünge 104 in die Schlitze 106 werden die Seitenwände der Unterschale 100 geringfügig aufgebogen. Aufgrund der federnden Eigenschaften der Unterschale 100 schnappen die Seitenwände dann in ihre ursprüngliche Ausgangsposition zurück, nachdem die Vorsprünge 104 in den Schlitzen 106 angeordnet sind.

Wie in der Darstellung der Fig. 11 gut zu erkennen ist überlappen sich die Seitenwände und die Stirnwände der Oberschale 98 um ein gewisses Maß, um das Austreten oder Eintreten elektromagnetischer Strahlung zuverlässig zu verhindern. Eventuelle Kühlkörper werden unmittelbar an die Wandungen der Unterschale 100 angeschraubt.

## Patentansprüche

1. Dachbalken für Einsatzfahrzeuge, mit einer Bodenplatte zur Verbindung mit einem Fahrzeug und einer Haube, die zusammen mit der Bodenplatte wenigstens abschnittsweise einen Montageraum definiert, in dem Funktionskomponenten und Befestigungselemente angeordnet sind, **dadurch gekennzeichnet, dass** die Haube (14; 84) wenigstens abschnittsweise an der Bodenplatte (60; 86) sowie an den Funktionskomponenten und/oder an den Befestigungselementen (38, 40, 42, 44, 46; 88) anliegt.

2. Dachbalken nach Anspruch 1, **dadurch gekennzeichnet, dass** die Haube (14; 84) die Bodenplatte (60; 86) wenigstens abschnittsweise auf einer, im montierten Zustand dem Montageraum abgewandten Seite hintergreift.

3. Dachbalken nach Anspruch 1 oder 2, **dadurch gekennzeichnet, dass** die Haube (14; 84) im montierten Zustand unter Vorspannung an den Funktionskomponenten und/oder Befestigungselementen (38, 40, 42, 44, 46; 88) anliegt.

4. Dachbalken nach Anspruch einem der vorstehenden Ansprüche, **dadurch gekennzeichnet, dass** die Haube (14) klappbar an der Bodenplatte (60) angeordnet ist.

5. Dachbalken nach Anspruch 4, **dadurch gekennzeichnet, dass** die Haube wenigstens eine Vorderwand (62) und eine Rückwand (66) aufweist, die jeweils klappbar an der Bodenplatte (60) befestigt sind.

6. Dachbalken nach einem der vorstehenden Ansprüche, **dadurch gekennzeichnet, dass** die Haube (14; 84) und die Bodenplatte (60; 86) mittels ineinander eingreifender Vorsprünge und die Vorsprünge klammerartig umgreifender Nuten (72) miteinander verbindbar sind.

7. Dachbalken nach wenigstens einem der vorstehenden Ansprüche, **dadurch gekennzeichnet, dass** die Haube (14) wenigstens zweiteilig ausgebildet ist.

8. Dachbalken nach Anspruch 7, **dadurch gekennzeichnet, dass** die Haubenteile (62, 64, 66) mittels wenigstens einer Verschlussschiene (68, 70) verbindbar sind.

9. Dachbalken nach Anspruch 8 **dadurch gekennzeichnet, dass** die Verschlussschiene (68, 70) Vorsprünge der Haubenteile (62, 64, 66) klammerartig umgreift.

10. Dachbalken nach Anspruch 7, 8 oder 9, **dadurch gekennzeichnet, dass** die Haubenteile (62, 64, 66) mittels wenigstens einer Nut- und Federanordnung ineinander eingreifen.

11. Dachbalken nach einem der Ansprüche 7 bis 10, **dadurch gekennzeichnet, dass** die Haube (14) wenigstens einen Deckelabschnitt (64), eine Vorderwand (62) und eine Rückwand (66) aufweist, die jeweils mittels Verschlussschienen (68, 70) miteinander verbindbar sind.

12. Dachbalken nach Anspruch 11, **dadurch gekennzeichnet, dass** die Vorderwand (62) und die Rückwand (66) wenigstens einen, mit einer Hauptkomponente parallel zur Bodenplatte verlaufenden Abschnitt aufweisen, der im montierten Zustand gegen die wenigstens eine Funktionskomponente und/oder das Befestigungselement (46) verspannt ist.

13. Dachbalken, insbesondere nach einem der vorstehenden Ansprüche, mit einem Gehäuse, wenigstens einer Funktionskomponente in dem Gehäuse und Befestigungselementen für die Funktionskomponenten, **dadurch gekennzeichnet, dass** die Befestigungselemente ein erstes Formteil (38, 42, 90) und ein zweites Formteil (40, 44, 46) mit an die wenigstens eine Funktionskomponente angepassten Ausnehmungen aufweisen, wobei die wenigstens eine Funktionskomponente zwischen dem ersten Formteil (38, 42, 90) und dem zweiten Formteil (40, 44, 46) aufgenommen und bei geschlossenem Gehäuse zwischen diesen gesichert ist

14. Dachbalken nach Anspruch 13, **dadurch gekennzeichnet, dass** das Gehäuse eine Bodenplatte (60) und eine Haube (14) aufweist, wobei im montierten Zustand die Haube (14), das erste und zweite Formteil (38, 42, 90, 40, 44, 46) und/oder die Bodenplatte (60) unter Vorspannung aneinander anliegen.

15. Dachbalken nach Anspruch 14, **dadurch gekennzeichnet, dass** im montierten Zustand die Formteile (38, 42, 90, 40, 44, 46) unter Vorspannung an der wenigstens einen Funktionskomponente anliegen.

16. Dachbalken nach wenigstens einem der vorstehenden Ansprüche, **dadurch gekennzeichnet, dass** die Bodenplatte (60) als Strangpressprofil ausgebildet ist.

17. Dachbalken nach wenigstens einem der vorstehenden Ansprüche 13 bis 16, **dadurch gekennzeichnet, dass** wenigstens eines der Formteile (38, 42, 90) in Nuten und/oder an Vorsprünge (74) der Bodenplatte (60) eingreift.

18. Dachbalken nach einem der Ansprüche 13 bis 17, **dadurch gekennzeichnet, dass** die Formteile mittels ineinander eingreifender Nuten und/oder Vorsprünge (43) aneinander gesichert sind.

19. Dachbalken nach einem der Ansprüche 13 bis 18, **dadurch gekennzeichnet, dass** die Formteile (38, 42, 90, 44, 46) als Schaumteile oder schaumartig ausgebildet sind.

20. Dachbalken nach wenigstens einem der vorstehenden Ansprüche, **dadurch gekennzeichnet, dass** wenigstens eines der seitlichen Enden der Haube (14) mittels einer mit der Bodenplatte (60) verbundenen Kuppelhaube (16) überdeckt ist.

21. Dachbalken nach Anspruch 20, **dadurch gekennzeichnet, dass** die Kuppelhaube (16) wenigstens abschnittsweise transparent ausgebildet ist.

22. Dachbalken nach Anspruch 20 oder 21, **dadurch gekennzeichnet, dass** die Kuppelhaube (16) mittels eines Schnellverschlusses mit der Bodenplatte (60) verbindbar ist.
